# EUROPÄISCHE PATENTANMELDUNG

(11) **EP 3 232 443 A1**
(43) Veröffentlichungstag der Anmeldung: **18.10.2017**
(21) Anmeldenummer: 16165577.4
(22) Anmeldetag: 15.04.2016
(51) Int. Cl.: G21F 7/005, G21F 5/12, B01L 1/02, B25J 21/02

(54) **SICHERUNGSEINRICHTUNG FÜR ISOLATORSCHLEUSEN**

(71) Anmelder: Castus GmbH & Co. KG, 88453 Erolzheim (DE)
(72) Erfinder: Die Erfindernennung liegt noch nicht vor
(74) Vertreter: Otten, Roth, Dobler & Partner mbB Patentanwälte

(57) **Zusammenfassung**

Vorgeschlagen wird eine Sicherungseinrichtung zum Freigeben und/oder Sperren einer Türe einer Schleuse eines Isolators, an welche ein Flansch eines Behälters angedockt werden kann , um zu verhindern, dass die Tür bei nicht angedocktem Flansch öffenbar ist, umfassend einen betätigbaren Verriegelungsgriff (1) zum Sperren und Entsperren der Tür durch Verstellen des Verriegelungsgriffs (1) zwischen wenigstens zwei Betätigungsstellungen, eine Aufnahmevorrichtung (21) zur Aufnahme des Flansches beim Andocken, wobei eine erste und eine zweite Verriegelungsvorrichtung so ausgebildet sind, dass in der Betätigungsstellung des Verriegelungsgriffs (1), in welcher der Verriegelungsgriff (1) die Tür sperrt, der Verriegelungsgriff (1) durch die zweite Verriegelungsvorrichtung gegen eine Betätigung gesperrt ist, wenn kein Flansch angedockt ist, und in der Betätigungsstellung des Verriegelungsgriffs (1), in welcher die Tür entsperrt ist und geöffnet werden kann, die erste Verriegelungsvorrichtung den Flansch sperrt.

## Beschreibung

Die Erfindung betrifft eine Sicherungseinrichtung zum Freigeben bzw. Sperren einer Türe einer Schleuse eines Isolators, an welche ein Flansch eines Behälters angedockt werden kann, um zu verhindern, dass die Tür bei nicht angedocktem Flansch öffenbar ist.

Aus dem Stand der Technik ist beispielsweise aus der EP 1 440 448 B1 eine Tür-Vorrichtung für einen Isolator bekannt, die über ein sogenanntes Alpha-Port verfügt. Zur Übergabe einer Probe oder dergleichen kann an die Tür einer solchen Schleuse ein so genannter Beta-Container angedockt werden. Um Kontaminationen vermeiden zu können, ist die Türe des Alpha-Ports nur dann öffenbar, wenn der Flansch des Containers fest angedockt ist. Dazu blockt die entsprechende Türvorrichtung wechselseitig entweder die Tür des Alpha-Ports oder den Flansch.

Aufgabe der Erfindung ist es, eine vereinfachte Sicherungseinrichtung für eine Isolatorschleuse bereitstellen zu können, die ein besonderes Maß an Sicherheit bietet.

Die Aufgabe wird, ausgehend von einer Sicherungseinrichtung der eingehend genannten Art, durch die Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Sicherungseinrichtung dient zum Freigeben bzw. Sperren einer Türe einer Schleuse eines Isolators. Bei einem Isolator handelt es sich um einen geschlossenen Raum oder Behälter, in den, sei es zu Laborzwecken, zu Versuchszwecken oder dergleichen, Proben eingebracht und dort in der Regel in der entsprechenden Weise je nach Verwendungszweck behandelt werden. Bei diesen Proben kann es sich beispielsweise um biologisches Material handeln. Es kann sich aber auch um Bauteile oder Stoffe handeln, die besonders rein gehalten werden müssen und nicht durch die Umgebung verunreinigt oder kontaminiert werden dürfen. Bei biologischem Material kann es auch darum gehen, die Umgebung nicht durch entsprechende Proben zu kontaminieren. In Frage kommen als Proben aber auch z.B. radioaktive Stoffe. Diese Proben können über einen geschlossenen Behälter, einen sogenannten Beta-Container, zugeführt und über die Schleuse in den Isolator eingebracht werden. Die Sicherungseinrichtung dient also dazu, dass die Probe stets von einem geschlossenen Raum umgeben ist, der keinen Kontakt zur Umgebung aufweist.

Wenn also der Flansch des Behälters angedockt ist, kann die Tür in der Schleuse geöffnet werden. Andernfalls ist dies zu vermeiden.

Der anzuflanschende Behälter, der zum Transport der Probe dient und meist als Beta-Container bezeichnet wird, ist an seiner Zugangsöffnung in der Regel durch eine Wechselscheibe verschlossen. Wird der Behälter an den Isolator angedockt, d.h. wird die Schleuse mit dem Flansch verbunden, so wird währenddessen bzw. während des Öffnungsvorgangs der Tür die Wechselscheibe fest mit der Schleusentür verbunden. Die Tür kann somit zusammen mit der Wechselscheibe geöffnet werden. Dabei gerät die Probe nicht mit der Umgebung in Kontakt, sondern die Öffnung des Behälters ist an die Schleuse angedockt und die Probe kann in den Isolator überführt werden. Beim Verschließen der Schleusentür, die sich im Isolator befindet, wird dann die Wechselscheibe wiederum gelöst und mit dem Behälter verbunden, sodass dieser dann, wenn der Behälterflansch wieder gelöst wird, den Behälter verschließt.

Die Schleusentür befindet sich in der Regel im Inneren des Isolators und verschließt dessen Zugangsöffnung. Diese Türe kann von Innen durch einen Verriegelungsgriff gesperrt oder entsperrt werden. Zu diesem Zweck ist der Verriegelungsgriff betätigbar und wird in die entsprechenden Betätigungsstellungen gebracht, die ein Öffnen oder Schließen der Tür ermöglichen. In der Regel wird der Verriegelungsgriff zu diesem Zweck gedreht. Darüber hinaus umfasst die Sicherungseinrichtung eine Aufnahmevorrichtung zur Aufnahme des Flansches beim Andocken. Der Flansch wird zum Beispiel auf diese Aufnahmevorrichtung aufgesteckt. Gegebenenfalls kann diese Aufnahmevorrichtung mit Dichtmitteln zur Abdichtung des Flansches versehen sein.

Dementsprechend umfasst die Aufnahmevorrichtung erfindungsgemäß zwei Verriegelungsvorrichtungen, nämlich:
Eine erste Verriegelungsvorrichtung, die mit dem Verriegelungsgriff zusammenwirkt und einen Bolzen zum Sperren bzw. Entsperren des Flansches des Behälters aufweist. Diese Verriegelungsvorrichtung wirkt so mit dem Verriegelungsgriff zusammen, dass deren Betätigung durch den Verriegelungsgriff erfolgen kann. Der Bolzen ist beweglich gelagert, um zwischen einer Sperr- und einer Entsperrposition verschoben werden zu können, d.h. der Flansch ist in der Entsperrposition abdockbar und in der Sperrposition nicht abdockbar. Über den Verriegelungsgriff kann der Bolzen bewegt bzw. betätigt werden, d.h. durch Betätigung des Verriegelungsgriffs ist der Bolzen zwischen der Sperr- und der Entsperrposition bewegbar und gibt entweder den Flansch frei oder sperrt ihn, sodass dieser nicht abdockbar ist.

Ferner ist eine zweite Verriegelungsvorrichtung vorgesehen, die ebenfalls mit dem Verriegelungsgriff zusammenwirkt, diesmal jedoch einen Schieber zum Sperren bzw. Entsperren des Verriegelungsgriffs umfasst. Bei dieser Verriegelungsvorrichtung geht es also darum, den Verriegelungsgriff selbst zu sperren oder zu entsperren. Das Sperren oder Entsperren erfolgt über einen Schieber. Dieser wiederum ist ebenfalls beweglich gelagert, um zwischen einer Sperr- und einer Entsperrposition verschoben werden zu können, sodass der Verriegelungsgriff in der Entsperrposition betätigbar und in der Sperrposition nicht betätigbar ist. Dieser Schieber wiederum ist durch das An- und Abdocken des Flansches zwischen der Sperr- bzw. Entsperrposition verschiebbar.

Die erste Verriegelungsvorrichtung sorgt also dafür, dass der Flansch nur dann abgedockt werden kann, wenn der Verriegelungsgriff sich in einer bestimmten Position bzw. Betätigungsstellung befindet. Diese Position entspricht der geschlossenen Tür. Ist der Flansch aber wiederum angedockt, sorgt die zweite Verriegelungsvorrichtung dafür, dass der Schieber derart verschoben wird, dass er den Verriegelungsgriff entsperrt, sodass die Tür geöffnet werden kann. Wird umgekehrt die Tür geschlossen und der Flansch abgedockt, bewegt sich wiederum der Schieber und sperrt die Tür, sodass diese nicht geöffnet werden kann.

Bei einem Ausführungsbeispiel der Erfindung ist die Aufnahmevorrichtung so ausgebildet, dass der Bolzen wiederum so gelagert ist, dass er in der Sperrposition unmittelbar am Flansch angreifen bzw. mit dem Flansch in Berührung stehen kann. In gleicher Weise kann der Schieber so gelagert sein, dass der Flansch unmittelbar am Schieber selbst angreift, um diesen verschieben zu können, insbesondere mit dem Schieber in Berührung steht. Der Bolzen bzw. der Schieber kann unmittelbar in der Aufnahmevorrichtung für den Flansch angeordnet sein, sodass z.B. der Bolzen direkt in den Bereich des Flansches verschoben werden kann, um diesen zu sperren bzw. dass der Schieber automatisch beim Andocken des Flansches mit diesem in Berührung kommt und verschoben wird. Auf diese Art und Weise kann die Vorrichtung möglichst kompakt und platzsparend gehalten werden.

Der Bolzen kann gemäß diesem Ausführungsbeispiel unmittelbar als Sperrriegel genutzt werden, der den Flansch in seiner Position bei einer Sperrung festhält. Desgleichen kann entsprechend auch der Schieber unmittelbar den Verriegelungsgriff blockieren. Dadurch, dass die Mechanik hinsichtlich ihrer Bauteile bei diesem Ausführungsbeispiel so sparsam wie möglich gehalten wird, kann auch die Wartungsanfälligkeit bzw. die Fehleranfälligkeit verringert werden.

Der Verriegelungsgriff kann, wie bereits oben beschrieben, drehbar gelagert sein und durch Drehung betätigt werden. Ein drehbarer Verriegelungsgriff kann insgesamt wenig Platz beanspruchen, im Gegensatz zu z.B. einem Schiebegriff. Darüber hinaus kann, je nach Ausbildung des Hebels, ein relativ großes Drehmoment übertragen werden. Somit kann eine besonders platzsparende aber auch stabile Verriegelung dadurch erreicht werden.

Die mit der Betätigung des Verriegelungsgriffs in Gang gesetzte Mechanik muss nicht über den Verriegelungsgriff selbst angetrieben werden. Es kann zudem ein Stellglied vorgesehen sein, das beim Betätigen des Verriegelungsgriffs mitbetätigt, insbesondere mitgedreht wird. Dieses Stellglied kann auch unmittelbar mit dem Verriegelungsgriff verbunden, beispielsweise auf der Drehachse gelagert sein. Das Stellglied kann auch für den Benutzer unsichtbar z.B. in der Türe untergebracht sein. Das Stellglied wiederum kann in vorteilhafter Weise, ohne die Betätigung des Verriegelungsgriffs selbst zu stören, an die weitere Mechanik angepasst sein. Beispielsweise kann grundsätzlich das Stellglied auch eine zahnradähnliche Form bzw. eine Riffelung aufweisen, während der Verriegelungsgriff selbst aufgrund seiner Haptik nicht mit einer solchen Außenkontur ausgebildet ist. Die in Rede stehende Sicherungseinrichtung kann somit möglichst flexibel ausgebildet werden.

Bei einer Ausführungsform der Erfindung kann das Stellglied beispielsweise eine Mantelfläche aufweisen, die wenigstens zwei Haltepositionen umfasst, über welche mit dem Bolzen bzw. dem Schieber direkt oder über eine Übertragungsvorrichtung zusammenwirkt bzw. zusammenwirken. Eine Bewegung über die Mantelfläche des Stellgliedes kann sich im Grunde vor allem bei einer Drehung des Verriegelungsgriffs anbieten, weil somit der Bolzen, der Schieber oder die Übertragungsvorrichtung direkt auf dieser Mantelfläche gleiten kann. Um die entsprechenden Haltepositionen am Verriegelungsgriff bzw. am Stellglied so auszubilden, dass diese eine andere Wirkung in den entsprechenden Sperr- oder Entsperrpositionen auf den Bolzen bzw. den Schieber ausüben, können diese Stellen abweichend von der regulären Mantelfläche ausgebildet sein.

Beim Drehen kann bei einem Ausführungsbeispiel der Erfindung der Bolzen bzw. der Schieber bzw. die Übertragungsvorrichtung so angeordnet sein, dass beim Betätigen die Mantelfläche zumindest teilweise überstrichen wird. Mechanisch bleiben somit der Verriegelungsgriff und die weiteren Baueinheiten, also der Bolzen, der Schieber oder die Übertragungsvorrichtung, stets in Kontakt. Auch die relative Position von Bolzen, Schieber und Übertragungseinrichtung bleiben erhalten. Über welchen Winkelbereich die Mantelfläche überstrichen wird, hängt von dem Winkelabstand zwischen Sperrposition und Entsperrposition ab. Insbesondere dann, wenn Bolzen und Schieber mechanisch vorgespannt sind, kann diese Verspannung über einen Kontakt mit der Mantelfläche aufgenommen werden. Auch dieses Merkmal kann zu einer besonderen Stabilität der entsprechenden Sicherungseinrichtung führen.

Bei einer bevorzugten Weiterbildung der Erfindung entsprechen die wenigstens zwei Haltepositionen den Sperr- bzw. Entsperrpositionen beim Sperren und Entsperren der Tür. Somit kann gewährleistet werden, dass automatisch dann, wenn der Verriegelungsgriff in die eine oder andere Position gedreht wird, je nach Sperr- oder Entsperrposition, auch die Tür bzw. der Flansch festgehalten wird. Hierdurch wird ein besonderes Maß an Sicherheit erreicht. Bei einer Ausführungsform der Erfindung kann eine erste Halteposition als Ausnehmung ausgebildet sein, d.h. wenn es sich bei der Mantelfläche z.B. um den Mantel eines Zylinders handelt, sind in der Mantelfläche Ausnehmungen oder Vertiefungen an z.B. der Entsperrposition vorgesehen, sodass die Übertragungsvorrichtung durch eine Vorspannung in die Ausnehmung hineingedrückt wird, also verschoben wird. Bei einer solchen Übertragungsvorrichtung kann es sich im Grunde um einen einfachen Stift handeln, der beispielsweise senkrecht zum Bolzen verschiebbar ist. Um möglichst vorteilhaft eine Kraft vom Bolzen auf den Stift bzw. umgekehrt übertragen zu können, kann der Bolzen eine zur Bewegungsrichtung des Stiftes geneigte Angriffsfläche aufweisen, an welcher der Stift selbst aufliegt, sodass bei Verschiebung des Stiftes auch der Bolzen verschoben wird bzw. umgekehrt.

Das Vorhandensein einer Übertragungsvorrichtung ermöglicht eine Kraftübertragung in einer anderen Richtung. Die Ausnehmung innerhalb der Mantelfläche verläuft senkrecht zu dieser, sodass hier eine Drehbewegung in eine Linearbewegung umgesetzt werden kann. Die Ausnehmung kann hinsichtlich ihrer Randkonturen so ausgebildet sein, dass der Stift auch wieder aus der Ausnehmung hinaus auf die Mantelfläche bewegt werden kann, etwa eine Wellenform oder eine Abrundung. Der Stift besitzt dann zwei verschiedene Positionen in Abhängigkeit von der Position des Stellgliedes, nämlich auf der Mantelfläche und eine Postition, in der er radial zur Drehachse des Stellgliedes verschoben ist (in der entsprechenden Ausnehmung des Stellgliedes). Zudem ermöglicht diese Ausführungsform, dass dadurch, dass die Ausnehmung auch nur lokal begrenzt vorgesehen sein kann, der entsprechende Zustand im Bereich der Ausnehmung grundsätzlich auch auf eine Position des Verriegelungsgriffs beschränkt sein kann.

Eine zweite Halteposition kann als zweite Ausnehmung ausgebildet sein, während die Übertragungsvorrichtung, die mit dem Schieber zusammenwirkt, als Hebel ausgebildet ist, der drehbar gelagert ist, sodass er beim Verschieben des Schiebers verkippt und in die zweite Ausnehmung eingreifen bzw. aus der zweiten Ausnehmung herausbewegbar ist. Diese mit dem Schieber zusammenwirkende Übertragungsvorrichtung kann beispielsweise als gelagerter Kipphebel ausgebildet sein, der an einem Ende durch Verschieben des Schiebers hochgedrückt wird und somit gedreht wird, dass der eigentliche, mit dem Schieber zusammenwirkende Hebelteil so verschwenkt wird, dass er nicht mehr in den Schieber eingreift. Ein Hebel kann insbesondere mehr Stabilität bieten, wenn es darum geht, einen Gegenstand wie den Verriegelungsgriff gegenüber einer Verdrehung wirksam zu sperren.

Damit die Mechanik möglichst stabil gelagert wird und Sperr- und Entsperrvorgang auch reversibel sein können, sind Bolzen bzw. Schieber jeweils federgelagert.

### Ausführungsbeispiel

Ein Ausführungsbeispiel der Erfindung ist in den Zeichnungen dargestellt und wird nachstehend unter Angabe weiterer Einzelheiten und Vorteile näher erläutert.

Im Einzelnen zeigen:
- Figur 1:: einen Verriegelungsgriff mit Stellglied, Übertragungselement und Bolzen (erste Verriegelungsvorrichtung),
- Figur 2:: den Verriegelungsgriff mit Stellglied und Schieber sowie entsprechendes Übertragungselement,
- Figuren 3 bis 5:: unterschiedliche Ansichten einer Schleusentür,
- Figur 6:: eine gegenüber Figur 1 geänderte Ansicht des Verriegelungsgriffs mit erster Verriegelungsvorrichtung sowie
- Figur 7:: eine gegenüber Figur 2 geänderte Ansicht des Verriegelungsgriffs mit zweiter Verriegelungsvorrichtung

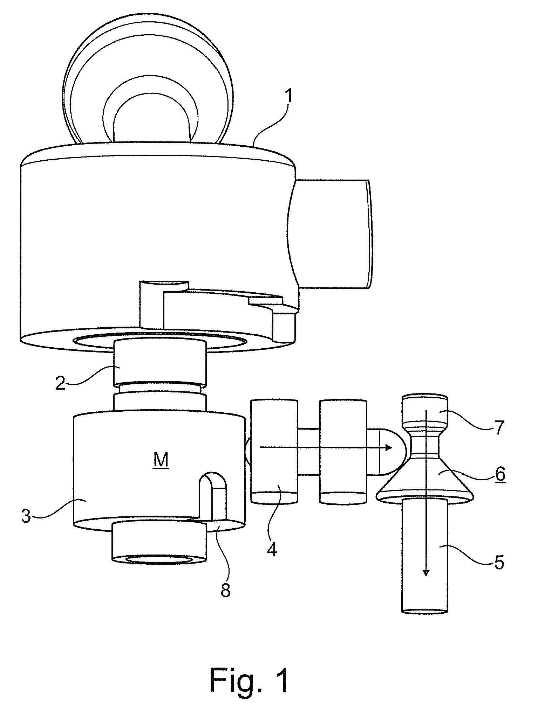

Figur 1 zeigt einen Verriegelungsgriff 1, der über eine feste Achse 2 mit einem Stellglied 3 verbunden ist. Das Stellglied 3 ist zylinderförmig ausgebildet und umfasst einzelne Ausnehmungen. Auf der Mantelfläche M des Stellgliedes 3 liegt ein abgerundeter Teil des Stiftes 4 an, der sich bekanntlich auf der Manteloberfläche M bewegen bzw. darauf abrollen kann. Der Bolzen 5 ist federgespannt. Er weist eine schräge Angriffsfläche 6 auf, die ebenfalls mit dem Stift 4 in Verbindung steht. Über die Fläche 6 wird der Stift 4 mittels des Bolzens 5 vorgespannt. Der Stift 4 weist im oberen Bereich auch einen Stopper 7 auf, damit der Stift nicht am Bolzen vorbeigezogen wird, sondern in einer vor dem Stopper befindlichen Ausnehmung bleiben kann. Im Stellglied 3 ist in Figur 1 eine Ausnehmung 8 zu sehen; diese betrifft jedoch die zweite Verriegelungsvorrichtung und das Sperren des Verriegelungsgriffs 1 selbst.

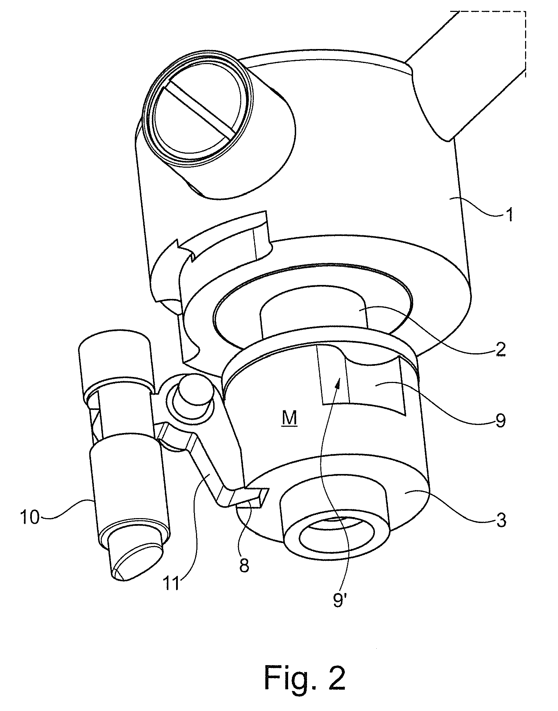

Wie in Figur 2 dargestellt ist, befindet sich im Stellglied 3 eine weitere Ausnehmung 9, die mit der ersten Verriegelungsvorrichtung zusammenhängt. In den Randbereichen ist sie derart abgerundet, dass zumindest zu einer Seite hin der Stift wieder aus der Ausnehmung 9 hinaustreten kann. Der Schieber 10 umfasst eine Ausnehmung, in die eine Hebelseite einer Übertragungsvorrichtung 11 eingreift. Auf der anderen Seite der Drehachse der Übertragungsvorrichtung 11 kann, wie in Figur 2 dargestellt, eine Verriegelung des Verriegelungsgriffs 1 erreicht werden. Diese greift sodann in den Ausnehmungsbereich 8 ein.

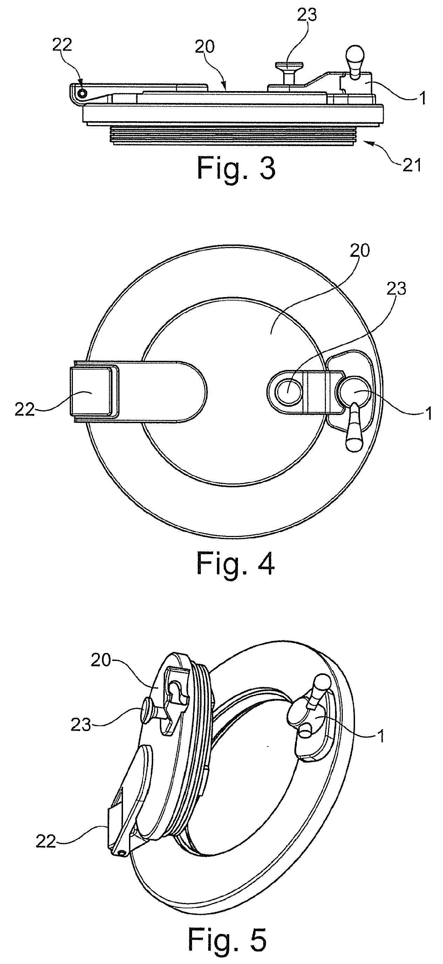

Die Figuren 3 bis 5 zeigen eine entsprechende Schleusentür 20 mit einer Aufnahmevorrichtung 21 für den Flansch eines Beta-Containers. Wie in Figur 3 dargestellt ist, besitzt die Tür ein Scharnier 22 und auf der gegenüberliegenden Seite eine Verriegelung mit einem Verriegelungsgriff 1. An der Tür selbst ist im Übrigen auch ein Bedienknopf 23 angebracht, über den die Tür in den Innenraum des Isolators verschwenkt werden kann. In Figur 4 ist eine Draufsicht auf die Tür 20 aus Sicht des Innenbereichs des Isolators dargestellt. Figur 5 wiederum zeigt die geöffnete Schleuse. Die Tür 20 ist über das Scharnier 22 in den Innenraum des Isolators verschwenkt. Der Verriegelungsgriff 1 befindet sich in geöffneter Stellung, d.h. die Tür 20 ist entsperrt.

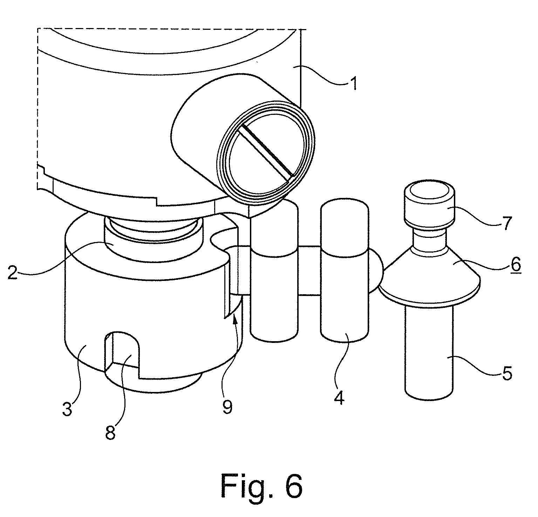

Die Funktionsweise der Sicherungseinrichtung, die in die Schleuse integriert ist, verhält sich dementsprechend wie folgt:
Zunächst ist der Isolator verschlossen. Der Verriegelungsgriff 1 steht in Sperrposition (vgl. Figur 6). In dieser Sperrposition ist das Stellglied 3 so gedreht, dass der Stift 4 in die Ausnehmung 9 eingreift. Der Stift 4 wiederum steht mit der kegelförmigen Mantelfläche 6 des Bolzens 5 in Kontakt.
Der Bolzen 5 ist von unten federgelagert und wird somit grundsätzlich nach oben gedrückt. Der Stift 4 wird entsprechend durch die nach oben wirkende Federkraft des Bolzens 5 über die Mantelfläche 6 nach links, d.h. in Richtung des Stellglieds 3 in den Bereich der Ausnehmung 9 verschoben.
Da der Bolzen 5 nach oben verschoben ist, übt der Bolzen auch keine Sperrwirkung aus, da in diesem Zustand noch kein Flansch Beta-Containers angedockt ist und somit ein Zusammenwirken mit einem Flansch noch nicht notwendig ist.

In dieser Position ist, wie in Figur 2 dargestellt, der Schieber 10, ebenfalls durch Federkraft, hier nach unten gedrückt, sodass der Verriegelungsgriff 1 gedreht werden kann. Der Schieber 10 bedient nämlich das Übertragungselement 11, das einen drehbar gelagerten, über Eck verlaufenden Hebel darstellt, der mit dem Schieber 10 zusammenwirkt und dann, wenn der Schieber 10 nach unten gedrückt wird, so verschwenkt wird, dass eine Rastnase des Hebels in die Ausnehmung 8 eingreift. In der geschlossenen Betätigungsstellung des Verriegelungsgriffs 1 ist das Stellglied 3, das über die feste Drehachse 2 mit dem Verriegelungsgriff 1 verbunden ist, so positioniert, dass sich die Ausnehmung 8 genau an dieser Stelle befindet.

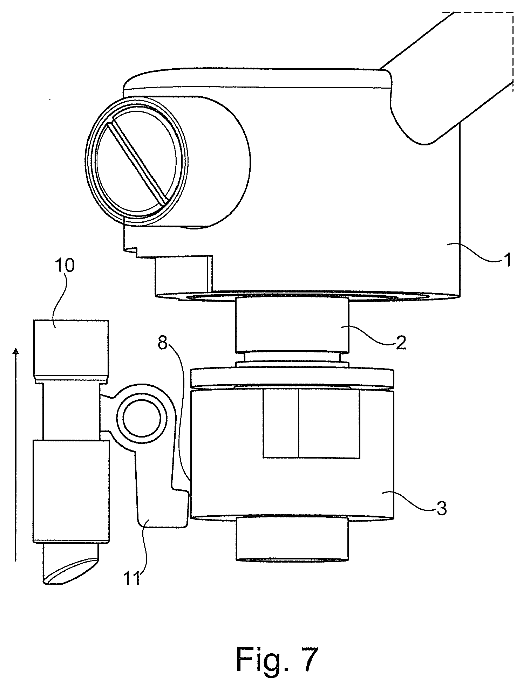

Wird nun der Flansch eines Beta-Containers an die Aufnahmevorrichtung 21 angedockt (in den Figuren 2, 3 von unten), so wird der Schieber 10 nach oben gedrückt. Das Übertragungselement bzw. der Hebel 11 wird dabei vom Schieber 10 mitgenommen, d.h. in Figur 7 im Uhrzeigersinn verschwenkt, sodass die Rastnase des Übertragungselements 11 nicht mehr im Eingriff mit der Ausnehmung 8 steht. Das Stellglied 3 ist somit zusammen mit dem Verriegelungsgriff 1 freigegeben. Nun kann der Verriegelungsgriff 1 gedreht werden, sodass das Stellglied aus der Ausnehmung 9 über die Abrundung 9' auf die Mantelfläche M gelangen kann. Dabei wird der Stift 4 gemäß Figur 1 nach rechts bewegt und drückt auf die kegelförmige Mantelfläche 6, sodass der Bolzen 5 wiederum nach unten verschoben wird und dort im Bereich der Aufnahmevorrichtung 21 den Flansch 1 sperrt, sodass dieser nicht abgedockt werden kann. Dabei wird der Bolzen 5 gegen seine Federlagerung gedrückt.

Während die Sperrung des Verriegelungsgriffs 1 durch die zweite Verriegelungsvorrichtung in nur einer Betätigungsstellung des Verriegelungsgriffs 1 erfolgt, setzt die Sperrung des Flansches unmittelbar dann ein, sobald der Verriegelungsgriff 1 aus dieser die Tür sperrenden Betätigungsstellung hinausbewegt wird.

### Bezugszeichenliste:

- 1: Verriegelungsgriff
- 2: Drehachse
- 3: Stellglied
- 4: Stift (Übertragungsvorrichtung)
- 5: Bolzen
- 6: kegelförmige Angriffsfläche (Mantelfläche???)
- 7: Anschlag
- 8: Ausnehmung (für zweite Verriegelungsvorrichtung)
- 9: Ausnehmung (für erste Verriegelungsvorrichtung)
- 9': Abrundung
- 10: Schieber
- 11: Hebel (Übertragungsvorrichtung)
- 20: Tür
- 21: Aufnahmevorrichtung
- 22: Scharnier
- 23: Knopf
- M: Mantelfläche des Stellglieds

## Patentansprüche

1. Sicherungseinrichtung zum Freigeben und/oder Sperren einer Türe einer Schleuse eines Isolators, an welche ein Flansch eines Behälters angedockt werden kann, um zu verhindern, dass die Tür bei nicht angedocktem Flansch öffenbar ist, umfassend:
• einen betätigbaren Verriegelungsgriff (1) zum Sperren und Entsperren der Tür durch Verstellen des Verriegelungsgriffs (1) zwischen wenigstens zwei Betätigungsstellungen,
• eine Aufnahmevorrichtung (21) zur Aufnahme des Flansches beim Andocken, welche umfasst:
i. eine erste Verriegelungsvorrichtung, die mit dem Verriegelungsgriff (1) zusammenwirkt und einen Bolzen (5) zum Sperren und/oder Entsperren des Flansches des Behälters aufweist, der beweglich gelagert ist, um zwischen einer Sperr- und einer Entsperrposition verschoben werden zu können, sodass der Flansch in der Entsperrposition abdockbar und in der Sperrposition nicht abdockbar ist, wobei der Bolzen (5) durch Betätigung des Verriegelungsgriffs (1) zwischen der Sperr- und der Entsperrposition bewegbar ist,
ii. eine zweite Verriegelungsvorrichtung, die mit dem Verriegelungsgriff (1) zusammenwirkt und einen Schieber (10) zum Sperren und/oder Entsperren des Verriegelungsgriffs (1) umfasst, der beweglich gelagert ist, um zwischen einer Sperr- und einer Entsperrposition verschoben werden zu können, sodass der Verriegelungsgriff in der Entsperrposition betätigbar und in der Sperrposition nicht betätigbar ist, wobei der Schieber durch An- und Abdocken des Flansches zwischen der Sperr- und der Entsperrposition verschiebbar ist,
wobei die erste und die zweite Verriegelungsvorrichtung so ausgebildet sind, dass in der Betätigungsstellung des Verriegelungsgriffs (1), in welcher der Verriegelungsgriff (1) die Tür sperrt, der Verriegelungsgriff (1) durch die zweite Verriegelungsvorrichtung gegen eine Betätigung gesperrt ist, wenn kein Flasch angedockt ist, und in der Betätigungsstellung des Verriegelungsgriffs (1), in welcher die Tür entsperrt ist und geöffnet werden kann, die erste Verriegelungsvorrichtung den Flansch sperrt.

2. Sicherungseinrichtung nach einem der vorgenannten Ansprüche, **dadurch gekennzeichnet, dass** die Aufnahmevorrichtung (21) so ausgebildet ist, dass der Bolzen (5) derart gelagert ist, dass er in der Sperrposition unmittelbar am Flansch angreift und/oder mit dem Flansch in Berührung steht, und/oder dass der Schieber (10) und/oder die Übertragungsvorrichtung (11) des Schiebers (10) in Sperrposition direkt am Verriegelungsgriff (1) angreift.

3. Sicherungseinrichtung nach einem der vorgenannten Ansprüche, **dadurch gekennzeichnet, dass** der Verriegelungsgriff (1) zur Betätigung drehbar gelagert ist.

4. Sicherungseinrichtung nach einem der vorgenannten Ansprüche, **dadurch gekennzeichnet, dass** der Verriegelungsgriff (1) ein Stellglied (3) aufweist, das beim Betätigen des Verriegelungsgriffs (1) mit betätigt, insbesondere mitgedreht wird.

5. Sicherungseinrichtung nach einem der vorgenannten Ansprüche, **dadurch gekennzeichnet, dass** das Stellglied (3) eine Mantelfläche (M) aufweist, die wenigstens zwei Haltepositionen umfasst, die mit dem Bolzen (5) und/oder dem Schieber (10) direkt oder über eine Übertragungsvorrichtung (4, 11) zusammenwirken.

6. Sicherungseinrichtung nach einem der vorgenannten Ansprüche, **dadurch gekennzeichnet, dass** wenigstens eine der Übertragungsvorrichtungen (4, 11) und/oder der Bolzen (5) und/oder der Schieber (10) so angeordnet sind, dass er / sie beim Betätigen des Verriegelungsgriffs die Mantelfläche (M) wenigstens abschnittsweise, überstreichen.

7. Sicherungseinrichtung nach einem der vorgenannten Ansprüche, **dadurch gekennzeichnet, dass** die wenigstens zwei Haltepositionen (8, 9) derart auf der Mantelfläche angeordnet sind, dass sie den Sperr- und/oder Entsperrpositionen zum Sperren und/oder Entsperren der Tür entsprechen.

8. Sicherungseinrichtung nach einem der vorgenannten Ansprüche, **dadurch gekennzeichnet, dass** eine erste der Haltepositionen (9) als Ausnehmung ausgebildet ist und die Übertragungsvorrichtung (4), die mit dem Bolzen (5) zusammenwirkt, als Stift (4) ausgebildet ist, der senkrecht zum Bolzen (5) verschiebbar ist, wobei der Bolzen (5) insbesondere eine zur Bewegungsrichtung des Stiftes (4) geneigte Angriffsfläche (6) aufweist, sodass durch Verschiebung des Stiftes (4) auch der Bolzen (5) verschiebbar ist.

9. Sicherungseinrichtung nach einem der vorgenannten Ansprüche, **dadurch gekennzeichnet, dass** eine zweite der Haltepositionen (8) als Ausnehmung ausgebildet ist und die Übertragungsvorrichtung (11), die mit dem Schieber (10) zusammenwirkt, als Hebel ausgebildet ist, der drehbar gelagert ist, sodass er beim Verschieben des Schiebers (10) verkippt wird und in diese Ausnehmung (8) eingreifen und/oder aus dieser Ausnehmung (8) herausbewegbar ist.

10. Sicherungseinrichtung nach einem der vorgenannten Ansprüche, **dadurch gekennzeichnet, dass** der Bolzen (5) und/oder der Schieber (10) federgelagert ist/sind.
